# EUROPEAN PATENT SPECIFICATION

(11) **EP 3 934 065 B1**
(45) Date of publication and mention of the grant of the patent: **24.12.2025**
(21) Application number: 19917172.9
(22) Date of filing: 25.02.2019
(51) Int. Cl.: H02K 1/32, H02K 9/19, H02K 7/00, H02K 1/276, H02K 9/06

(54) **ROTOR AND ELECTRIC MOTOR INCLUDING SAME**
ROTOR UND ELEKTROMOTOR DAMIT
ROTOR ET MOTEUR ÉLECTRIQUE LE COMPRENANT

(43) Date of publication of application: 05.01.2022
(73) Proprietor: LG Magna e-Powertrain Co., Ltd., Seo-gu, Incheon 22744 (KR)
(72) Inventor: OH, Jinsu, Seoul 06772 (KR); LEE, Jiwon, Seoul 06772 (KR)
(74) Representative: Vossius & Partner Patentanwälte Rechtsanwälte mbB
(86) International application number: PCT/KR2019/002266
(87) International publication number: WO 2020/175715

(56) References cited:
- WO-A1-2017/072874
- WO-A1-2017/072874
- JP-A- 2002 345 188
- JP-A- 2010 063 253
- JP-A- 2010 239 799
- JP-A- 2011 254 571
- JP-A- 2011 254 571
- JP-A- 2012 182 952
- JP-A- 2014 187 834
- US-A1- 2019 006 913

## Description

### TECHNICAL FIELD

The present disclosure relates to an electric motor that directly cools a shaft and a rotor using oil circulation.

### BACKGROUND

Recently, an electric vehicle having an electric motor as a driving source for traveling the vehicle has been released as an eco-friendly vehicle because it does not emit exhaust gas.

An electric motor (or motor) includes a rotor and a stator, and the rotor may be rotatably provided inside the stator.

The stator has a stator coil wound around a stator core. When current flows along the stator coil to rotate the rotor, heat is generated in the stator coil. Thus, technologies are being developed to cool down the heat generated in the electric motor.

As for the electric motor used in the electric vehicle, cooling of heat generated in the electric motor plays an important role in achieving a smaller and more efficient electric motor.

Motor cooling methods employed in the related art include an indirect cooling method (water cooling) in which a channel for circulating cooling water is provided in a housing to indirectly cool a motor, and a direct cooling method (oil cooling) in which oil is sprayed onto a stator coil and the like to directly cool a motor.

The direct cooling method has high cooling efficiency and cooling performance, compared to the indirect cooling method using the cooling water. Thus, research and development on the direct cooling method have been actively carried out recently.

Patent Literature, US 9,847,682 B2 (Date of Patent: Dec. 19, 2017, Denso Corporation), discloses a rotor and a rotating electric machine having the same.

In the Patent Literature, a fluid channel through which oil flows is formed in a shaft and a rotor core. As the oil flows along the fluid channel, the rotor core and permanent magnets can be cooled.

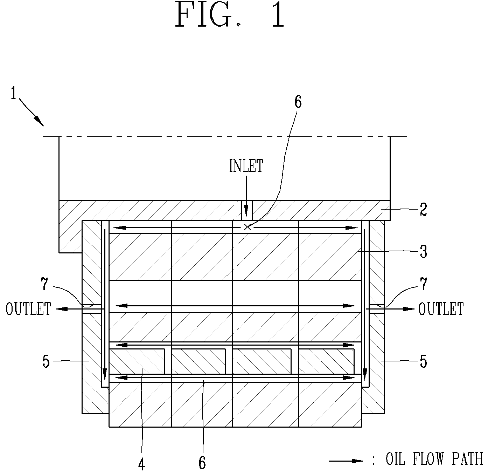

FIG. 1 is a conceptual view illustrating a movement path of oil in an electric motor of the related art.

In the related art, an oil channel 6 passing from a rotor core 3 to magnets 4) is formed in the rotor core 3 axially in both directions of a shaft 2, so that oil can be sprayed in the both directions through end plates 5 mounted on both ends of the rotor core 3.

However, there is a disadvantage in circulating the oil when the oil is diverged and sprayed from the rotor core 3 axially in the both directions opposite to each other.

For example, a circulation flow rate at which the oil flows along the oil channel 6 is slowed, and thereby the cooling performance of the oil is deteriorated.

In addition, after the oil introduced through an oil inlet of the shaft 2 is filled in the oil channel 6 inside the rotor core 3 by centrifugal force, when the oil is sprayed in the both directions through center holes 7 formed through the both end plates 5, respectively, the oil is stagnated in the oil channel 6 formed between the two end plates 5.

JP 2011 254571 (A) relates to a cooling structure for a rotating electric machine such as an electric motor or a generator, which is arranged outside and has a stator fixed to the case.

JP 2002 345188 (A) relates to rotating electrical machines such as permanent magnet synchronous motors.

### TECHNICAL PROBLEM

The present disclosure has been invented to solve those problems and other drawbacks of the related art, and an aspect of the present disclosure is to provide an electric motor capable of increasing a circulation flow rate of oil so as to improve cooling performance of a shaft and a rotor by using oil circulation.

Another aspect of the present disclosure is to provide an electric motor capable of increasing a circulation flow rate of oil flowing along a fluid channel defined inside a shaft and a rotor core by fast rotating air around end plates to lower pressure of the air.

### TECHNICAL SOLUTION

In order to achieve those aspects and other advantages according to the present disclosure, there is provided a rotor that may include: a rotary shaft including a first fluid channel so as to allow a cooling fluid to flow therein; a rotor core including a plurality of permanent magnets and second fluid channels communicating with the first fluid channel and configured to cool the permanent magnets, the rotor core being mounted to be rotatable centering on the rotary shaft; and a plurality of end rings which are mounted on opposite end portions of the rotor core, respectively, each of the end rings including a plurality of injection holes communicating with the second fluid channels and configured to inject the cooling fluid. Each of the plurality of end rings may include a plurality of rotary fins circumferentially arranged on an outer surface of the end ring to be spaced apart from each other, so as to provide power for circulating the cooling fluid injected through the plurality of spray holes into the first fluid channel.

Each of the plurality of rotary fins protrudes in the axial direction from the outer surface of the end ring, and is formed in a curved shape to be arcuately curved from an inner end portion to an outer end portion of the end ring in a radial direction, so as to rotate air around the end ring.

In one example related to the present disclosure, a first end ring mounted to one end portion of the rotor core in a lengthwise direction of the rotor core and a second end ring mounted to another end portion of the rotor core in the lengthwise direction may be asymmetric with each other.

In one example related to the present disclosure, a plurality of first rotary fins formed on the first end ring and a plurality of second rotary fins formed on the second end ring may be curved in the same direction as a rotating direction of the rotor core.

In one example related to the present disclosure, each of the plurality of end rings may include a plurality of injection fluid channels formed in an inner surface of the end ring facing one end of the rotor core to communicate with the plurality of spray holes, and spaced apart from one another in a circumferential direction, and a plurality of return fluid channels arranged alternately with the plurality of injection fluid channels in the circumferential direction, to transfer the cooling fluid from the rotor core to an opposite side in the lengthwise direction of the rotor core.

In one example related to the present disclosure, axial fluid channels extending from a radially inner end portion of the rotor core may be connected to communicate with the first fluid channel, and each of the plurality of return fluid channels may further include a connection fluid channel connected to communicate with the axial fluid channel.

In one example related to the present disclosure, the cooling fluid may be oil.

In one example related to the present disclosure, each of the plurality of spray holes may be upwardly inclined toward an outside of the end ring.

In one example related to the present disclosure, the plurality of injection fluid channels formed in the first end ring and the plurality of return fluid channels formed in the second end ring may be disposed to face each other in the lengthwise direction of the rotor core.

In one example related to the present disclosure, the cooling fluid may directly cool down the rotor core and the permanent magnets while moving from the first fluid channel to the second fluid channels, and cool down a stator coil by being sprayed onto the stator coil through the plurality of spray holes.

In one example related to the present disclosure, a path of the cooling fluid transferred from the rotary shaft to the rotor core may be formed in the same number as the number of poles of the permanent magnets, and a plurality of communication holes connecting the rotary shaft and the rotor core may be formed through a middle portion of the rotary shaft in a radial direction.

In one example related to the present disclosure, a path of the cooling fluid transferred from the rotary shaft to the rotor core may be formed in the same number as a half of the number of poles of the permanent magnets, and a plurality of communication holes connecting the rotary shaft and the rotor core may be formed through each of a front end portion and a rear end portion of the rotary shaft in a radial direction.

In one example related to the present disclosure, the plurality of communication holes may include a plurality of first communication holes formed in the front end portion of the rotary shaft and a plurality of second communication holes formed in the rear end portion of the rotary shaft, and the first communication hole and the second communication hole may have a phase difference of 360 degrees/the number of poles.

In order to achieve those aspects and other advantages according to the present disclosure, there is provided an electric motor that may include: a housing having an accommodation space therein; a stator including a stator core and a stator coil wound around the stator core, and disposed in the housing; a rotor including a rotary shaft, a rotor core mounted in the stator to be rotatable centering on the rotary shaft, and a plurality of permanent magnets mounted on the rotor core; and a plurality of end rings respectively mounted on both ends of the rotor core. A plurality of spray nozzles may be disposed inside the housing, so that a cooling fluid is sprayed onto the stator coil and the stator core through the plurality of spray nozzles. The rotor may include a first fluid channel formed inside the rotary shaft, second fluid channels formed inside the rotor core to be in contact with the permanent magnets, and a plurality of spray holes connected to communicate with the second fluid channels and formed obliquely through an outer circumferential portion of the end ring such that the cooling fluid is sprayed onto an end portion of the stator coil, wherein a path along which the cooling fluid flows through the first fluid channel, the second fluid channels, and the plurality of spray holes has a single-pass structure in which the cooling fluid flows in a single direction.

In one example related to the present disclosure, a plurality of rotary fins may protrude in an arcuate shape from an outer surface of each of the plurality of end rings, to apply power for allowing the cooling fluid spayed from the plurality of spray nozzles and the plurality of spray holes to circulate to the first fluid channel.

### ADVANTAGEOUS EFFECTS

Hereinafter, effects of an electric motor according to the present disclosure will be described.

First, a plurality of rotary fins may protrude from an outer surface of each end ring in a curved shape along a circumferential direction. As the plurality of rotary fins rotate together with a rotor core, air around spray holes of the end ring can flow rapidly, which may cause a pressure drop. Accordingly, a cooling fluid can flow from a first fluid channel of a rotary shaft into axial fluid channels and second fluid channels of the rotor core so as to be sprayed onto an inner circumferential surface of an end turn of a stator through a plurality of spray holes.

Second, the plurality of rotary fins can provide circulating power to the cooling fluid, so that the cooling fluid can move from the first fluid channel of the rotary shaft into the axial fluid channels and second fluid channels of the rotor core and easily circulate back to the first fluid channel of the rotary shaft through spray holes of the end ring, thereby increasing a circulation flow rate of the cooling fluid.

Third, since a rotation speed of the plurality of rotary fins increases according to the rotation of the rotor core, a flow rate of the cooling fluid introduced into the rotary shaft can increase.

Fourth, since the plurality of rotary fins are formed on each of a first end ring and a second end ring to be curved in the same direction as a rotating direction of the rotor core, circulating power of the cooling fluid can further be doubled.

Fifth, as paths along which the cooling fluid is transferred from the rotary shaft to the rotor core are independently formed in the same number as the number of poles, the cooling fluid can flow along each of a plurality of permanent magnets so as to uniformly cool down the permanent magnets for each polarity.

Sixth, a plurality of injection fluid channels and a plurality of return fluid channels may be alternately disposed in an inner surface of the end ring in a spaced manner along a circumferential direction, and the cooling fluid in the rotor core can move in the same single direction along the axial fluid channels and the second fluid channels so as to implement a single-pass structure. Accordingly, a flow rate and a circulation flow rate of the cooling fluid can increase, thereby improving cooling performance of the rotor and the stator.

### BRIEF DESCRIPTION OF THE DRAWINGS

FIG. 1 is a conceptual view illustrating a movement path of oil in an electric motor of the related art.
FIG. 2 is a cross-sectional view illustrating an internal structure of an electric motor in accordance with one implementation of the present disclosure.
FIG. 3 is a conceptual view illustrating a rotor of FIG. 2.
FIG. 4 is a conceptual view illustrating end rings mounted to both ends of a rotor core in FIG. 3.
FIG. 5 is a conceptual view illustrating a structure in which a plurality of injection fluid channels and a plurality of return fluid channels are alternately formed through each end ring in FIG. 4.
FIG. 6 is a cross-sectional view taken along the line VI-VI of FIG. 3.
FIG. 7 is a cross-sectional view taken along the line VII-VII of FIG. 6.
FIG. 8 is a conceptual view illustrating a movement path of oil in accordance with the present disclosure.
FIG. 9 shows a graph and a table comparing a flow rate of a cooling fluid flowing into an inlet of a rotary shaft, with respect to an electric motor with rotary fins according to the present disclosure and an electric motor without rotary fins.
FIG. 10 is a conceptual view illustrating a movement path of oil in accordance with another implementation of the present disclosure.
FIG. 11 is a conceptual view illustrating paths 1 and 2 of a cooling fluid transferred from a rotary shaft to a rotor core of FIG. 2.
FIG. 12 is a conceptual view taken along the line XII-XII in FIG. 11 illustrating a structure in which paths 1 and 2 of a cooling fluid transferred in both directions from the rotary shaft to the rotor core, respectively, are formed with a phase difference from each other in a circumferential direction.

### DETAILED DESCRIPTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the main point of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

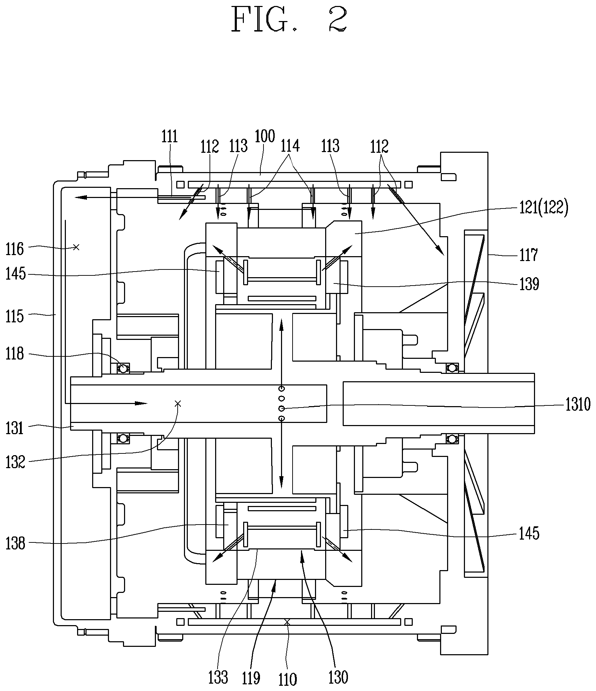

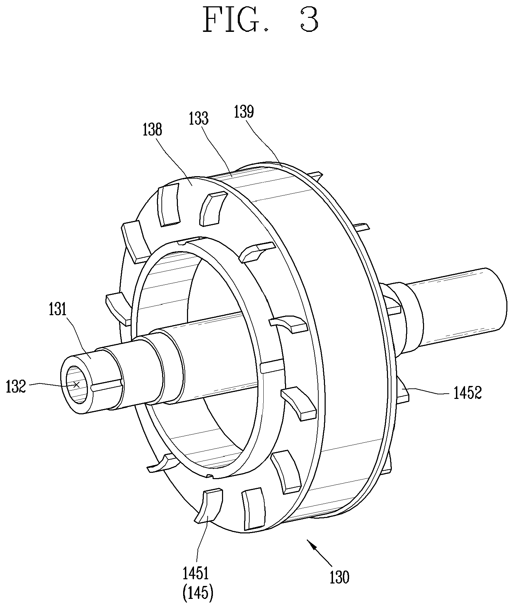

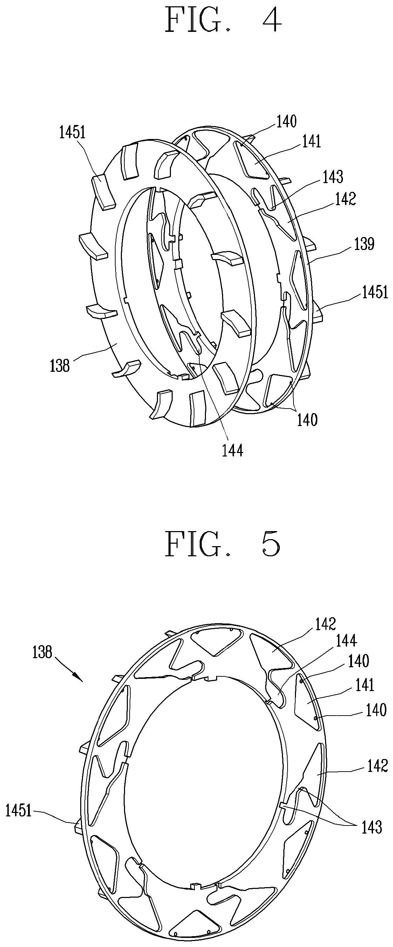

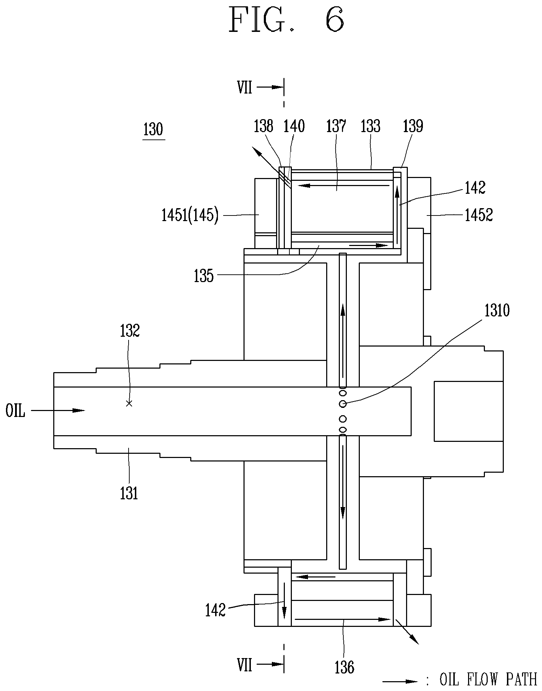

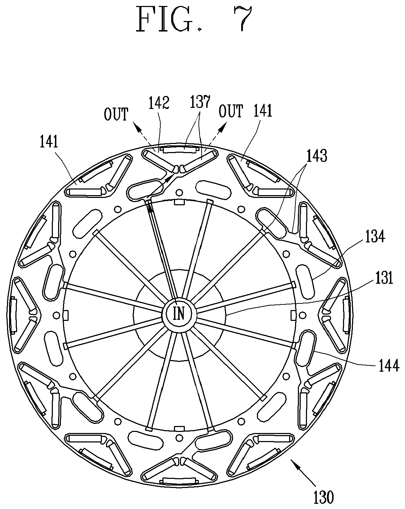

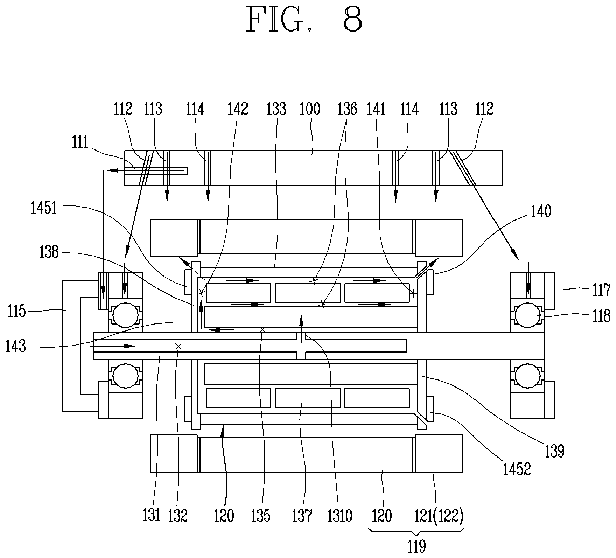

FIG. 2 is a cross-sectional view illustrating an internal structure of an electric motor in accordance with one implementation of the present disclosure, FIG. 3 is a conceptual view illustrating a rotor 130 of FIG. 2, FIG. 4 is a conceptual view illustrating end rings mounted to both ends of a rotor core 133 in FIG. 3, FIG. 5 is a conceptual view illustrating a structure in which a plurality of injection fluid channels 141 and a plurality of return fluid channels 142 are alternately formed through each end ring in FIG. 4, FIG. 6 is a cross-sectional view taken along the line VI-VI of FIG. 3, FIG. 7 is a cross-sectional view taken along the line VII-VII of FIG. 6, and FIG. 8 is a conceptual view illustrating a movement path of oil in accordance with the present disclosure.

An electric motor according to the present disclosure may include a housing 100, a housing cover, a stator 119, and a rotor 130.

The housing 100 may have a cylindrical shape. An accommodation space may be formed inside the housing 100. The stator 119 and the rotor 130 may be accommodated in the housing 100.

The housing cover may be provided on both ends of the housing 100 in a lengthwise direction to cover both end portions of the housing 100. The housing cover may include a first housing cover 115 disposed on one end of the housing 100 and a second housing cover 117 disposed on another end of the housing 100.

A cooling fluid channel 110 in which a cooling fluid such as oil flows may be defined in the housing 100. An inlet may be formed through an upper portion of the housing 100, so that the cooling fluid can be injected into the housing 100.

A plurality of spray nozzles (or injection nozzles) may be formed through the inside of the housing 100 in a thickness direction.

The plurality of spray nozzles may be spaced apart from one another in a lengthwise direction of the housing 100. One side of each of the plurality of spray nozzles may communicate with the cooling fluid channel 110 and another side of each of the plurality of spray nozzles may communicate with the accommodation space of the housing 100.

The plurality of spray nozzles may be formed perpendicularly downward or may be inclined. Some of the plurality of spray nozzles may be formed horizontally.

First spray nozzles 111 formed horizontally among the plurality of spray nozzles may spray oil into the accommodation space toward the first housing cover 115, and second spray nozzles 112 formed to be inclined among the plurality of spray nozzles may spray oil into the accommodation space toward a bearing 118.

Third spray nozzles 113 formed perpendicularly downward among the plurality of spray nozzles may spray oil into the accommodation space toward an outer circumferential portion of an end turn 122 of the stator coil 121, and fourth spray nozzles 114 formed perpendicularly downward among the plurality of spray nozzles may spray oil into the accommodation space toward the stator core 120.

With this configuration, a cooling fluid such as oil can be sprayed onto the stator coil 121, the stator core 120, and the bearing 118 to cool the stator coil 121, the stator core 120, and the bearing 118.

A cover fluid channel 116 may be defined in the first housing cover 115. One side of the cover fluid channel 116 may communicate with an accommodation hole in which oil sprayed from the first spray nozzles 111, and a middle portion of the cover fluid channel 116 may communicate with an inside of one end portion of the rotary shaft 131.

With this configuration, the oil injected from the first spray nozzles 111 may be sprayed into the cover fluid channel 116 through the accommodation hole, and the oil flowing along the cover fluid channel 116 may flow into the one end portion of the rotary shaft 131.

The stator 119 may include a stator core 120 and a stator coil 121. The stator core 120 may be formed by stacking a plurality of electrical steel sheets. A rotor accommodation hole for accommodating the rotor 130 may be formed in a radial center of the stator core 120.

A plurality of slots and a plurality of teeth may be alternately disposed at an inner side of the stator core 12 in a circumferential direction. The plurality of slots may be formed through the stator core 120 in an axial direction.

The stator coil 121 may be configured as a hairpin type. The plurality of stator coils 121 may be wound around the stator core 120 through the plurality of slots. End turns 122 that protrude from the slots to the outside of the stator core 120 may be disposed at both end portions of the stator coil 121, respectively.

The end turns 122 may be bent from the stator coil 121 at a preset angle and extend to an opposite side in a lengthwise direction of the stator core 120.

The rotor 130 may include a rotary shaft 131, a rotor core 133, permanent magnets 137, and end rings.

The rotary shaft 131 may have a first fluid channel 132 therein, such that a cooling fluid flows along the first fluid channel 132. The first fluid channel 132 may extend in the axial direction. A plurality of communication holes 1310 may be formed through one side of the rotary shaft 131 in the radial direction.

The plurality of communication holes 1310 may be configured to transfer the cooling fluid flowing along the first fluid channel 132 into the rotor core 133. The plurality of communication holes 1310 may be disposed on the rotary shaft 131 to be spaced apart from one another in the circumferential direction. The plurality of communication holes 1310 may be disposed on a central portion of the rotary shaft 131 in a lengthwise direction of the rotary shaft 131.

The rotor core 133 may be mounted to the rotary shaft 131 to be rotatable together with the rotary shaft 131. The rotor core 133 may be formed in a cylindrical shape. The rotor core 133 may be formed by stacking a plurality of electrical steel sheets.

A rotary shaft accommodation hole for accommodating the rotary shaft 131 may be formed through the center of the rotor core 133 in the axial direction.

A plurality of permanent magnet accommodation holes for accommodating a plurality of permanent magnets 137 may be formed in the rotor core 133.

A plurality of axial fluid channels 135 and a plurality of second fluid channels 136 through which the cooling fluid flows may be defined in the rotor core 133.

The plurality of axial fluid channels 135 may be defined in an inner end portion of the rotor core 133 in the radial direction. The plurality of axial fluid channels 135 may be spaced apart from one another in the circumferential direction. Each of the plurality of axial fluid channels 135 may extend along the axial direction of the rotor core 133.

The plurality of axial fluid channels 135 may communicate with the plurality of communication holes 1310, such that the cooling fluid can move from the rotary shaft 131 to the rotor core 133 through the plurality of communication holes 1310. Accordingly, the cooling fluid can directly cool down the rotor core 133 through heat exchange with the rotor core 133.

The plurality of second fluid channels 136 may surround the permanent magnets 137 such that the cooling fluid can be brought into contact with at least parts or portions of the permanent magnets 137 so as to cool down the permanent magnets 137 through heat conduction from the permanent magnets 137.

The plurality of second fluid channels 136 may be defined in an outer end portion of the rotor core 133 in the radial direction. The plurality of second fluid channels 136 may be spaced apart from one another in the circumferential direction. Each of the plurality of second fluid channels 136 may extend in a lengthwise direction of the rotor core 133.

The plurality of second fluid channels 136 may be parallel to the plurality of axial fluid channels 135. However, the plurality of second fluid channels 136 may be connected respectively to the plurality of axial fluid channels 135 by inner fluid channels defined in an inner surface of the end ring. The plurality of second fluid channels 136 may be arranged in parallel, for example, in two rows.

With this configuration, the cooling fluid can flow from the axial fluid channels 135 into the second fluid channels 136 to be brought into contact with the permanent magnets 137, thereby cooling down the permanent magnets 137 through heat exchange with the permanent magnets 137.

The end rings may be coupled to cover both ends of the rotor core 133, and may be mounted to the rotary shaft 131 to be rotatable together with the rotary shaft 131. A rotary shaft accommodation hole may be formed through a center of each end ring.

A plurality of spray holes (or injection holes) 140 may be formed through an outer circumferential portion of the end ring in a thickness direction. Each of the plurality of spray holes 140 may communicate with the plurality of second fluid channels 136. The plurality of spray holes 140 may be spaced apart from one another in a circumferential direction of the end ring.

With this configuration, the cooling fluid can be sprayed from the rotor core 133 into the accommodation space of the housing 100 through the plurality of spray holes 140.

Each of the plurality of spray holes 140 may be disposed at an inner side of the outer circumferential portion of each end ring to be inclined toward an inner circumferential surface of the end turn 122 of the stator coil 121.

With this configuration, the cooling fluid can be sprayed on the inner circumferential surface of the end turn 122 of the stator coil 121 through the plurality of spray holes 140. Accordingly, a contact area of the stator coil 121 with the cooling fluid can be further expanded to the inner circumferential surface as well as the outer circumferential surface of the end turn 122, thereby further improving the cooling performance by taking more heat from the stator coil 121.

A plurality of rotary fins 145 may protrude from an outer surface of each end ring in the axial direction, so as to rotate air around the end ring. Each of the plurality of rotary fins 145 may rotate together with the rotor core 133 centering on the rotary shaft 131.

Each of the plurality of rotary fins 145 may be disposed to be spaced apart from one another in the circumferential direction. Each of the plurality of rotary fins 145 may be formed in a curved shape. Each of the plurality of rotary fins 145 may be formed in an arcuate shape. The plurality of rotary fins 145 may be bent in the same direction as a rotating direction of the rotor core 133.

Outer end portions of the rotary fins 145 in the radial direction may be disposed adjacent to an outer circumferential portion of the end ring, and inner end portions of the rotary fins 145 may be disposed adjacent to the rotary shaft accommodation hole of the end ring. An interval between the outer end portions of the plurality of rotary fins 145 adjacent to each other in the circumferential direction may be wider than an interval between the inner end portions of the plurality of rotary fins 145 adjacent to each other in the circumferential direction.

With this configuration, the outer end portions of the rotary fins 145 are disposed adjacent to the spray holes 140, such that air around an outer side of the spray holes 140 can be quickly moved. Accordingly, pressure can be lowered at the outer side of the spray holes 140, which can facilitate circulation of the cooling fluid.

For example, when the pressure at the outer side of the spray holes 140 is lowered, internal pressure of the rotor core 133 can be relatively increased, which may facilitate the cooling fluid to be sprayed from the inside of the rotor core 133 through the spray holes 140.

A plurality of injection fluid channels 141 and a plurality of return fluid channels 142 may be disposed in an inner surface of each end ring.

The plurality of injection fluid channels 141 and the plurality of return fluid channels 142 may be alternately spaced apart from each other in the circumferential direction of the end ring. Each of the plurality of injection fluid channels 141 and the plurality of return fluid channels 142 may be recessed in the inner surface of each end ring in the thickness direction.

The plurality of injection fluid channels 141 and the plurality of return fluid channels 142 may be formed to correspond to an arrangement shape of the permanent magnets 137.

For example, the plurality of permanent magnets 137 may be formed in a plate shape, and may be arranged in an inverted triangle shape.

The plurality of injection fluid channels 141 and the plurality of return fluid channels 142 may be formed in an inverted triangular shape.

The plurality of injection fluid channels 141 may communicate with the plurality of spray holes 140, respectively. Each of the plurality of injection fluid channels 141 may be configured to connect the second fluid channel 136 and the spray hole 140. The plurality of spray holes 140 may be disposed on an outer surface of each of the plurality of injection fluid channels 141 to be spaced apart from each other in the circumferential direction.

With this configuration, the plurality of injection fluid channels 141 can temporarily collect and store the cooling fluid delivered from the second fluid channels 136 and distribute the cooling fluid into the plurality of spray holes 140. The distributed cooling fluid may then be sprayed onto the end turn 122 through the plurality of spray holes 140.

The plurality of return fluid channels 142 may change a flowing direction of the cooling fluid transferred from the axial fluid channels 135 to return to the second fluid channels 136.

Each of the plurality of return fluid channels 142 may be provided with a connection fluid channel 143 at an inner side of the end ring in the radial direction. One side of the connection fluid channel 143 may communicate with the second fluid channel 136 and another side of the connection fluid channel 143 may communicate with the axial fluid channel 135, such that the second fluid channel 136 and the axial fluid channel 135 can be connected to each other.

The rotor core 133 may include a plurality of weight-reducing holes 134 disposed between the permanent magnet accommodation holes and the rotary shaft accommodation hole. The plurality of weight-reducing holes 134 may extend along the lengthwise direction of the rotor core 133. The plurality of weight-reducing holes 134 may be spaced apart from the permanent magnet accommodation holes with a preset phase difference θ in the circumferential direction.

A plurality of weight-reducing grooves 144 may be formed at the inner surface of each end ring. The plurality of weight-reducing grooves 144 may be formed in a shape corresponding to the plurality of weight-reducing holes 134 so as to communicate with the plurality of weight-reducing holes 134 in an overlapping manner along the axial direction.

The connection fluid channel 143 may communicate with the weight-reducing groove 144. One side of the connection fluid channel 143 may connect the second fluid channel 136 and the weight-reducing groove 144, and another side of the connection fluid channel 143 may connect the weight-reducing groove 144 and the axial fluid channel 135.

With this configuration, the plurality of injection fluid channels 141 and the plurality of return fluid channels 142 can be alternately arranged in the circumferential direction, so that the cooling fluid can be transferred from the rotary shaft 131 to the rotor core 133 through a single-pass structure.

The single-pass structure means that the cooling fluid passes only once along the same path (or direction) through the axial fluid channels 135 and the second fluid channels 136, which are the inner fluid channels of the rotor core 133, from the rotary shaft 131.

Hereinafter, the single-pass structure of the rotor core 133 and the end ring will be described with reference to FIG. 8.

Front and rear end portions of the rotary shaft 131 may be rotatably supported by bearings 118. The bearings 118 may be mounted to the first housing cover 115 and the second housing cover 117. A sealing cover may be mounted on the first housing cover 115, to seal a gap between the first housing cover 115 and the first fluid channel 132 of the rotary shaft 131.

The end rings may include a first end ring 138 disposed on one end of the rotor core 133 facing the first housing cover 115 in the axial direction, and a second end ring 139 disposed on another end of the rotor core 133 facing the second housing cover 117 in the axial direction.

In order to implement the single-pass structure, the first end ring 138 and the second end ring 139 may be formed to be asymmetric to each other.

An outer surface of the first end ring 138 and an outer surface of the second end ring 139 may be disposed to face opposite directions. First rotary fins 1451 formed on the outer surface of the first end ring 138 and second rotary fins 1452 formed on the outer surface of the second end ring 139 may be curved in the same direction as the rotating direction of the rotor core 133.

For example, when the first end ring 138 is viewed from the first housing cover 115 in the axial direction, the first rotary fins 1451 may be curved clockwise and rightward from inside to outside in the radial direction. When the second end ring 139 is viewed from the second housing cover 117 in the axial direction, the second rotary fins 1452 may be curved counterclockwise and leftward from the inside to the outside in the radial direction.

The plurality of injection fluid channels 141 and the plurality of return fluid channels 142 formed in the inner surface of the first end ring 138 and the plurality of injection fluid channels 141 and the plurality of return fluid channels 142 formed in the inner surface of the second end ring 139 may be disposed in an alternating manner in the axial direction with a preset phase difference in the circumferential direction.

That is, the injection fluid channel 141 of the first end ring 138 and the return fluid channel 142 of the second end ring 139 may be disposed to face each other in the axial direction, and the injection fluid channel 141 of the first end ring 138 and the injection fluid channel 141 of the second end ring 139 may be alternately arranged in the axial direction.

Hereinafter, a movement path of a cooling fluid will be described.

An inlet may be formed from one end portion of the rotary shaft 131 to be opened. Accordingly, a cooling fluid such as oil can be introduced into the first fluid channel 132 through the inlet of the rotary shaft 131. The cooling fluid may be air.

The cooling fluid may cool the rotary shaft 131 through heat exchange with the rotary shaft 131 while flowing along the first fluid channel 132 of the rotary shaft 131.

The cooling fluid may be delivered to the rotor core 133 through the communication hole 1310 connecting the rotary shaft 131 and the rotor core 133. At this time, the number of paths along which the cooling fluid is transferred from the rotary shaft 131 to the rotor core 133 may be the same as the number of poles of the electric motor.

For example, in this implementation, the electric motor may have 6 poles, and six paths of the cooling fluid transmitted from the rotary shaft 131 to the rotor core 133 through the communication holes 1310 may be defined.

The cooling fluid may be introduced into the first end ring 138 along the axial fluid channels 135 extending toward the first end ring 138 in the axial direction.

The connection fluid channels 143 connecting the first end ring 138 and the rotor core 133 may be defined in the inner surface of the first end ring 138 and extend radially to communicate with the axial fluid channels 135. The cooling fluid may be introduced into the weight-reducing grooves 144 through the connection fluid channels 143 via the axial fluid channels 135, temporarily stay in the weight-reducing grooves 144, and then flow to the return fluid channels 142 through the connection fluid channels 143 again.

The return fluid channels 142 may communicate with the second fluid channels 136 and switch a flowing direction of the cooling fluid such that the cooling fluid can flow from the first end ring 138 to the second end ring 139 in the axial direction.

The second fluid channels 136 may communicate with the permanent magnet accommodation holes. The second fluid channels 136 may be arranged in parallel in two rows at an outer side and an inner side of the rotor core 133 in the radial direction of the rotor core 133.

The cooling fluid may be introduced into the permanent magnet accommodation holes while flowing along the second fluid channels 136, so as to cool down the permanent magnets 137 through heat exchange with the permanent magnets 137.

The cooling fluid may flow onto an inner surface of the second end ring 139 through the injection fluid channel 141 that connects the rotor core 133 and the second end ring 139 and faces the return fluid channel 142 of the first end ring 138 in the axial direction.

The cooling fluid can be sprayed from the second end ring 139 into the accommodation space of the housing 100 through the plurality of spray holes 140 formed through the injection fluid channel 141. At this time, the cooling fluid can be sprayed onto an inner circumferential surface of the end turn 122 through the plurality of spray holes 140, thereby cooling down the stator coil 121 through heat exchange with the end turn 122.

The cooling fluid sprayed from the second end ring 139 may flow back into the rotary shaft 131 and circulate.

Here, the cooling fluid may be transferred from the rotary shaft 131 to the rotor core 133. The cooling fluid inside the rotor core 133 may flow in the same single direction, that is, from the first end ring 138 to the second end ring 139 along the second fluid channels 136, and be sprayed onto the inner circumferential surface of the end turn 122, which protrudes from one end portion of the stator core 120 in the lengthwise direction, through the spray holes 140 of the second end ring 138. Thus, the cooling fluid can flow through a single-pass structure.

When the number of poles of the electric motor is 6, the number of paths that the cooling fluid is transmitted from the rotary shaft 131 to the rotor core 133 may be 6 paths, and the cooling fluid may radially move in the rotor core 133 independently for each polarity and move in a single pass for each polarity.

However, a moving direction of the cooling fluid in the rotor core 133 may change from the first end ring 138 to the second end ring 139 or from the second end ring 139 to the first end ring 138 in an alternating manner whenever a position changes to an adjacent polarity in a circumferential direction.

Therefore, according to the present disclosure, the plurality of rotary fins 145 may protrude from the outer surface of each end ring to be curved in the circumferential direction. As the plurality of rotary fins 145 rotate together with the rotor core 133, air around the spray holes 140 of the end ring can flow fast to cause a pressure drop. Accordingly, the cooling fluid can flow from the first fluid channel 132 of the rotary shaft 131 to the axial fluid channels 135 and the second fluid channels 136 of the rotor core 133 so as to be sprayed onto the inner circumferential surface of the end turn 122 of the stator 119 through the plurality of spray holes 140.

As the plurality of rotary fins 145 provide circulating power to the cooling fluid, the cooling fluid can move from the first fluid channel 132 of the rotary shaft 131 to the axial fluid channels 135 and the second fluid channels 136 of the rotor core 133, so as to easily circulate from the spray holes 140 of the end ring back to the first fluid channel 132 of the rotary shaft 131, thereby increasing a circulation flow rate of the cooling fluid.

Also, since a rotation speed of the plurality of rotary fins 145 increases according to the rotation of the rotor core 133, a flow rate of the cooling fluid flowing into the rotary shaft 131 can increase.

In addition, since the plurality of rotary fins 145 are disposed on each of the first end ring 138 and the second end ring 139 to be curved in the same direction as the rotating direction of the rotor core 133, circulating power of the cooling fluid can be further doubled.

Further, as the paths along which the cooling fluid is transmitted from the rotary shaft 131 to the rotor core 133 are independently formed in the same number as the number of poles, the cooling fluid can flow to each of the plurality of permanent magnets 137, so as to uniformly cool down the permanent magnets 137 for each polarity.

Furthermore, the plurality of injection fluid channels 141 and the plurality of return fluid channels 142 are alternately disposed in the inner surface of the end ring to be spaced apart from each other in the circumferential direction, and the cooling fluid in the rotor core 133 can move in the same single direction along the axial fluid channels 135 and the second fluid channels 136 so as to implement the single-pass structure. Accordingly, the flow rate and the circulation flow rate of the cooling fluid can increase, thereby improving cooling performance of the rotor 130 and the stator 119.

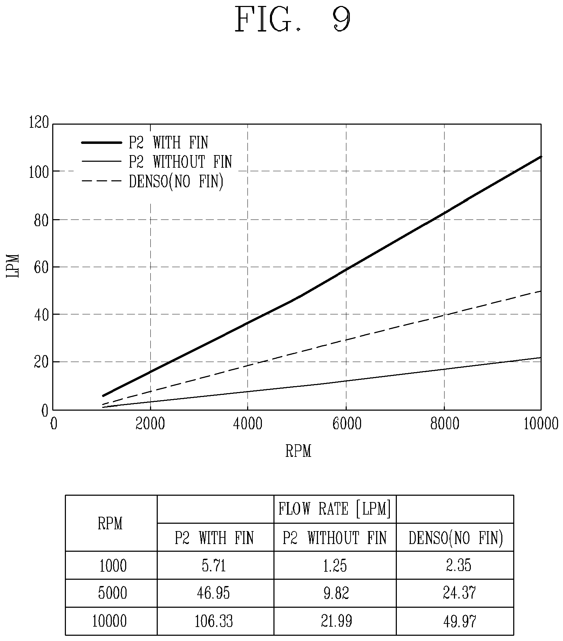

FIG. 9 shows a graph and a table comparing a flow rate of a cooling fluid flowing into the inlet of the rotary shaft, with respect to an electric motor with rotary fins according to the present disclosure and an electric motor without rotary fins.

An electric motor of the present disclosure with the rotary fins 145 has a cooling flow rate of 5.71 LPM at 1000 rpm and the cooling fluid is introduced into the inlet of the rotary shaft 131. On the other hand, an electric motor 1 without the rotary fins 145 has a cooling flow rate of 1.25 LPM at 1000 rpm, and an electric motor 2 (DENSO Cooperation) without the rotary fins 145 has a cooling flow rate of 2.35 LPM at 1000 rpm.

The electric motor of the present disclosure with the rotary fins 145 has a cooling flow rate of 46.95 LPM at 5000 rpm and the cooling fluid is introduced into the inlet of the rotary shaft 131. On the other hand, the electric motor 1 without the rotary fins 145 has a cooling flow rate of 9.82 LPM at 5000 rpm, and the electric motor 2 (DENSO Cooperation) without the rotary fins 145 has a cooling flow rate of 24.37 LPM at 5000 rpm.

The electric motor of the present disclosure with the rotary fins 145 has a cooling flow rate of 106.33 LPM at 10000 rpm and the cooling fluid is introduced into the inlet of the rotary shaft 131. On the other hand, the electric motor 1 without the rotary fins 145 has a cooling flow rate of 21.99 LPM at 10000 rpm, and the electric motor 2 (DENSO Corporation) without the rotary fins 145 has a cooling flow rate of 49.97 LPM at 10000 rpm.

According to this, the cooling flow rate of the electric motor 1 without the rotary fins 145 is less than even 20% of that of the electric motor according to the present disclosure with the rotary fins 145 and the electric motor 2 (DENSO Corporation) without the rotary fins 145 is less than even 50% of that of the electric motor according to the present disclosure. It can thusly be confirmed that the electric motor according to the present disclosure with the rotary fins 145 provides remarkable effects compared to the electric motors of the related art.

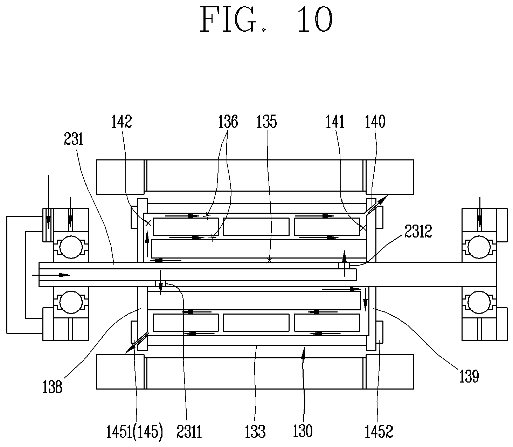

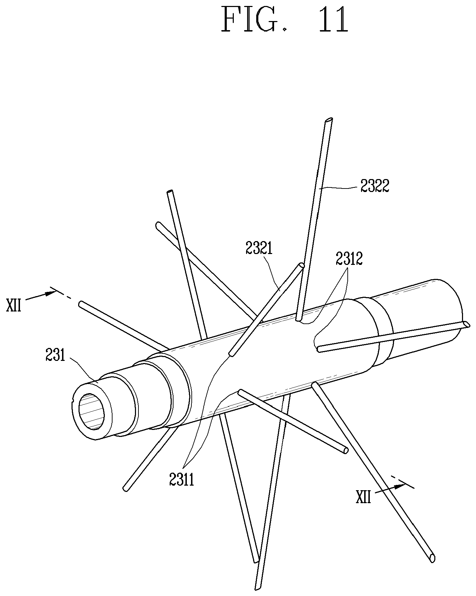

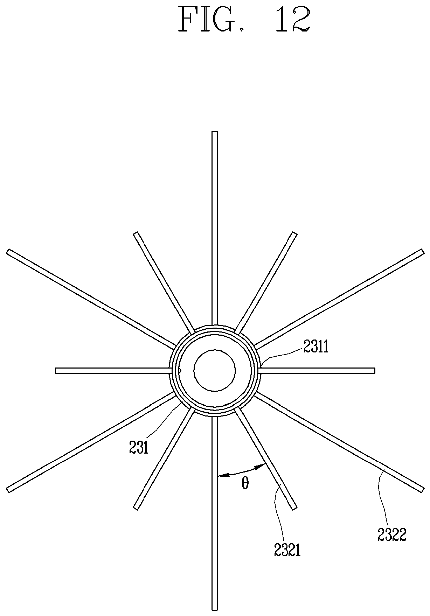

FIG. 10 is a conceptual view illustrating a movement path of oil in accordance with another implementation of the present disclosure, FIG. 11 is a conceptual view illustrating paths 1 and 2 of a cooling fluid transferred from a rotary shaft to a rotor core of FIG. 2, and FIG. 12 is a conceptual view taken along the line XII-XII in FIG. 11, which illustrates a structure in which paths 1 and 2 of a cooling fluid transferred in both directions from the rotary shaft to the rotor core, respectively, are formed with a phase difference from each other in a circumferential direction.

In this implementation, a plurality of communication holes 2311 and 2312 may be formed through a rotary shaft 231 in a spaced manner. This implementation is different from the foregoing implementation illustrated in FIGS. 1 to 9 in that a cooling fluid transferred from the rotary shaft 231 to a rotor core through the plurality of communication holes flows axially in both directions opposite to each other.

The plurality of communication holes 2311 and 2312 may include a plurality of first communication holes 2311 and a plurality of second communication holes 2312. The first communication holes 2311 and the second communication holes 2312 may be spaced apart from each other in the axial direction.

The plurality of first communication holes 2311 may be disposed adjacent to a first end ring, and the plurality of second communication holes 2312 may be disposed adjacent to a second end ring.

The plurality of first communication holes 2311 and the plurality of second communication holes 2312 may be spaced apart from each other at equal intervals in a circumferential direction of the rotary shaft 231.

The plurality of first communication holes 2311 and the plurality of second communication holes 2312 may be alternately disposed in the axial direction with a preset phase difference in the circumferential direction of the rotary shaft 231.

A path 1 2321 of a cooling fluid transmitted from the rotary shaft 231 to the rotor core through the plurality of first communication holes 2311 and a path 2 2322 of a cooling fluid transmitted from the rotary shaft 231 to the rotor core through the plurality of second communication holes 2312 may be provided in the same number as the number of poles/2.

The paths 1 2321 and the paths 2 2322 may be alternately disposed in the axial direction with a phase difference of 360 degrees/the number of poles.

Each of the path 1 2321 and the path 2 2322 has a single-pass fluid channel.

Since other components are the same as or similar to those in the foregoing implementation of FIGS. 1 to 9, a duplicated description will be omitted.

## Claims

1. A rotor comprising:
a rotary shaft (131, 231) having a first fluid channel (132) in which a cooling fluid flows;
a rotor core (133) having a plurality of permanent magnets (137) and second fluid channels (136) communicating with the first fluid channel (132) for cooling the permanent magnets (137), and mounted to be rotatable centering on the rotary shaft (131, 231); and
a plurality of end rings (138, 139) respectively mounted on both end portions of the rotor core (133), and having a plurality of spray holes (140) communicating with the second fluid channels and through which the cooling fluid is sprayed, and
wherein each of the plurality of end rings (138, 139) is provided with a plurality of rotary fins (145) disposed on an outer surface of the end ring (138, 139) to be spaced apart from one another in a circumferential direction, so as to provide power for circulating the cooling fluid sprayed through the plurality of spray holes (140) into the first fluid channel (132),
**characterized in that**
each of the plurality of rotary fins (145) protrudes in the axial direction from the outer surface of the end ring (138, 139), and is formed in a curved shape to be arcuately curved from an inner end portion to an outer end portion of the end ring (138, 139) in a radial direction, so as to rotate air around the end ring (138, 139), and
wherein the outer end portions of the rotary fins (145) are disposed adjacent to the spray holes (140), such that air around an outer side of the spray holes (140) is quickly moved and pressure lowered at the outer side of the spray holes (140) to facilitate circulation of the cooling fluid.

2. The rotor of claim 1, wherein a first end ring (138) mounted to one end portion of the rotor core (133) in a lengthwise direction of the rotor core (133) and a second end ring (139) mounted to another end portion of the rotor core (133) in the lengthwise direction are asymmetric with each other.

3. The rotor of claim 2, wherein a plurality of first rotary fins (1451) formed on the first end ring (133) and a plurality of second rotary fins (1452) formed on the second end ring (139) are curved in the same direction as a rotating direction of the rotor core (133).

4. The rotor of claim 2, wherein each of the plurality of end rings (138, 139) comprises:
a plurality of injection fluid channels (141) formed in an inner surface of the end ring (138, 139) facing one end of the rotor core (133) to communicate with the plurality of spray holes (140), and spaced apart from one another in a circumferential direction; and
a plurality of return fluid channels (142) arranged alternately with the plurality of injection fluid channels (141) in the circumferential direction, to transfer the cooling fluid from the rotor core (133) to an opposite side in the lengthwise direction of the rotor core (133).

5. The rotor of claim 4, wherein axial fluid channels (135) extending from a radially inner end portion of the rotor core (133) are connected to communicate with the first fluid channel (132), and
wherein each of the plurality of return fluid channels (142) further comprises a connection fluid channel (143) connected to communicate with the axial fluid channel (135).

6. The rotor of claim 1, wherein the cooling fluid is oil.

7. The rotor of claim 1, wherein each of the plurality of spray holes (140) is upwardly inclined toward an outside of the end ring (138, 139).

8. The rotor of claim 4, wherein the plurality of injection fluid channels (141) formed in the first end ring (138) and the plurality of return fluid channels (142) formed in the second end ring (139) are disposed to face each other in the lengthwise direction of the rotor core (133).

9. The rotor of claim 1, wherein the cooling fluid directly cools down the rotor core (133) and the permanent magnets (137) while moving from the first fluid channel (132) to the second fluid channels (136), and cools down a stator coil (121) by being sprayed onto the stator coil (121) through the plurality of spray holes (140).

10. The rotor of claim 9, wherein a path of the cooling fluid transferred from the rotary shaft (131) to the rotor core (133) is formed in the same number as the number of poles of the permanent magnets (137), and a plurality of communication holes (1310) connecting the rotary shaft (131) and the rotor core (133) are formed through a middle portion of the rotary shaft (131) in a radial direction.

11. The rotor of claim 9, wherein a path of the cooling fluid transferred from the rotary shaft (131, 231) to the rotor core (133) is formed in the same number as a half of the number of poles of the permanent magnets (137), and a plurality of communication holes (1310, 2311, 2312) connecting the rotary shaft (131, 231) and the rotor core (133) are formed through each of a front end portion and a rear end portion of the rotary shaft (131, 231) in a radial direction.

12. The rotor of claim 11, wherein the plurality of communication holes (1310) comprise a plurality of first communication holes (2311) formed in the front end portion of the rotary shaft (231) and a plurality of second communication holes (2312) formed in the rear end portion of the rotary shaft (231), and
wherein the first communication hole (2311) and the second communication hole (2312) have a phase difference of 360 degrees/the number of poles.

13. An electric motor comprising:
a housing (100) having an accommodation space therein;
a stator (119) including a stator core (120) and a stator coil (121) wound around the stator core (120), and disposed in the housing (100); and
a rotor (130) according to any one of the preceding claims, wherein the rotor core (133) is mounted in the stator (119), and wherein the plurality of permanent magnets (137) are mounted on the rotor core (133); and
wherein the plurality of spray nozzles (140) are disposed inside the housing (100), so that the cooling fluid is sprayed onto the stator coil (121) and the stator core (120) through the plurality of spray nozzles (140),
wherein the first fluid channel (132) is formed inside the rotary shaft (131, 231);
wherein the second fluid channels (136) are formed inside the rotor core (133) to be in contact with the permanent magnets (137); and
wherein the plurality of spray holes (140) formed obliquely through an outer circumferential portion of the end ring (138, 139) such that the cooling fluid is sprayed onto an end portion of the stator coil (121), and
wherein a path along which the cooling fluid flows through the first fluid channel (132), the second fluid channels (136), and the plurality of spray holes (140) has a single-pass structure in which the cooling fluid flows in a single direction.

14. The electric motor of claim 13, wherein a plurality of rotary fins (145) protrude in an arcuate shape from an outer surface of each of the plurality of end rings (138, 139), to apply power for allowing the cooling fluid spayed from the plurality of spray nozzles (111, 112) and the plurality of spray holes (140) to circulate to the first fluid channel (132).

## Patentansprüche

1. Rotor, der aufweist:
eine Drehwelle (131, 231) mit einem ersten Fluidkanal (132), in dem ein Kühlfluid fließt;
einen Rotorkern (133) mit mehreren Permanentmagneten (137) und zweiten Fluidkanälen (136), die mit dem ersten Fluidkanal (132) zur Kühlung der Permanentmagnete (137) in Verbindung stehen, und der drehbar auf der Drehwelle (131, 231) zentriert angebracht ist; und
mehrere Endringe (138, 139), die jeweils an beiden Endabschnitten des Rotorkerns (133) angebracht sind und mehrere Sprühlöchern (140) aufweisen, die mit den zweiten Fluidkanälen in Verbindung stehen und durch die das Kühlfluid gesprüht wird, und
wobei jeder der mehreren Endringe (138, 139) mit mehreren Drehrippen (145) versehen ist, die an einer Außenfläche des Endrings (138, 139) so angeordnet sind, dass sie in einer Umfangsrichtung voneinander beabstandet sind, um Energie zum Umwälzen des durch die mehreren Sprühlöcher (140) gesprühten Kühlfluids in den ersten Fluidkanal (132) bereitzustellen,
**dadurch gekennzeichnet, dass**
jede der mehreren Drehrippen (145) in der axialen Richtung von der Außenfläche des Endrings (138, 139) vorsteht und in einer gekrümmten Form ausgebildet ist, so dass sie von einem inneren Endabschnitt zu einem äußeren Endabschnitt des Endrings (138, 139) in einer radialen Richtung bogenförmig gekrümmt ist, um Luft um den Endring (138, 139) zu drehen, und
wobei die äußeren Endabschnitte der Drehrippen (145) benachbart zu den Sprühlöchern (140) angeordnet sind, so dass Luft um eine Außenseite der Sprühlöcher (140) schnell bewegt wird und der Druck an der Außenseite der Sprühlöcher (140) gesenkt wird, um die Umwälzung des Kühlfluids zu erleichtern.

2. Rotor nach Anspruch 1, wobei ein erster Endring (138), der an einem Endabschnitt des Rotorkerns (133) in einer Längsrichtung des Rotorkerns (133) angebracht ist, und ein zweiter Endring (139), der an einem anderen Endabschnitt des Rotorkerns (133) in der Längsrichtung angebracht ist, zueinander asymmetrisch sind.

3. Rotor nach Anspruch 2, wobei mehrere erste Drehrippen (1451), die an dem ersten Endring (133) ausgebildet sind, und mehrere zweite Drehrippen (1452), die an dem zweiten Endring (139) ausgebildet sind, in der gleichen Richtung wie eine Drehrichtung des Rotorkerns (133) gekrümmt sind.

4. Rotor nach Anspruch 2, wobei jeder der mehreren Endringe (138, 139) aufweist:
mehrere Einspritzfluidkanäle (141), die in einer Innenfläche des Endrings (138, 139) ausgebildet sind, die einem Ende des Rotorkerns (133) zugewandt ist, so dass sie mit der mehreren Sprühlöchern (140) in Verbindung stehen, und die in einer Umfangsrichtung voneinander beabstandet sind; und
mehrere Rücklauffluidkanäle (142), die abwechselnd mit den mehreren Einspritzfluidkanälen (141) in der Umfangsrichtung angeordnet sind, um das Kühlfluid von dem Rotorkern (133) zu einer gegenüberliegenden Seite in der Längsrichtung des Rotorkerns (133) zu übertragen.

5. Rotor nach Anspruch 4, wobei axiale Fluidkanäle (135), die sich von einem radial inneren Endabschnitt des Rotorkerns (133) erstrecken, so verbunden sind, dass sie mit dem ersten Fluidkanal (132) in Verbindung stehen, und
wobei jeder der mehreren Rücklauffluidkanäle (142) ferner einen Verbindungsfluidkanal (143) aufweist, der so verbunden ist, dass er mit dem axialen Fluidkanal (135) in Verbindung steht.

6. Rotor nach Anspruch 1, wobei das Kühlfluid Öl ist.

7. Rotor nach Anspruch 1, wobei jedes der mehreren Sprühlöcher (140) nach oben zu einer Außenseite des Endrings (138, 139) geneigt ist.

8. Rotor nach Anspruch 4, wobei die mehreren Einspritzfluidkanäle (141), die in dem ersten Endring (138) ausgebildet sind, und die mehreren Rücklauffluidkanäle (142), die in dem zweiten Endring (139) ausgebildet sind, so angeordnet sind, dass sie einander in Längsrichtung des Rotorkerns (133) gegenüberliegen.

9. Rotor nach Anspruch 1, wobei das Kühlfluid den Rotorkern (133) und die Permanentmagnete (137) direkt abkühlt, während es sich von dem ersten Fluidkanal (132) zu den zweiten Fluidkanälen (136) bewegt, und eine Statorspule (121) abkühlt, indem es durch die mehreren Sprühlöcher (140) auf die Statorspule (121) gesprüht wird.

10. Rotor nach Anspruch 9, wobei ein Weg des Kühlfluids, das von der Drehwelle (131) zum Rotorkern (133) übertragen wird, in der gleichen Anzahl wie die Anzahl der Pole der Permanentmagneten (137) ausgebildet ist, und mehrere Verbindungslöcher (1310), die die Drehwelle (131) und den Rotorkern (133) verbinden, durch einen mittleren Abschnitt der Drehwelle (131) in einer radialen Richtung ausgebildet sind.

11. Rotor nach Anspruch 9, wobei ein Weg des Kühlfluids, das von der Drehwelle (131, 231) zum Rotorkern (133) übertragen wird, in der gleichen Anzahl wie die Hälfte der Anzahl der Pole der Permanentmagneten (137) ausgebildet ist, und mehrere Verbindungslöcher (1310, 2311, 2312), die die Drehwelle (131, 231) und den Rotorkern (133) verbinden, jeweils durch einen vorderen Endabschnitt und einen hinteren Endabschnitt der Drehwelle (131, 231) in einer radialen Richtung ausgebildet sind.

12. Rotor nach Anspruch 11, wobei die mehreren Verbindungslöcher (1310) mehrere erste Verbindungslöcher (2311), die in dem vorderen Endabschnitt der Drehwelle (231) ausgebildet sind, und mehrere zweite Verbindungslöcher (2312) aufweisen, die in dem hinteren Endabschnitt der Drehwelle (231) ausgebildet sind, und
wobei das erste Verbindungsloch (2311) und das zweite Verbindungsloch (2312) eine Phasendifferenz von 360 Grad/die Anzahl der Pole aufweisen.

13. Elektromotor, der aufweist:
ein Gehäuse (100) mit einem Aufnahmeraum darin;
einen Stator (119), der einen Statorkern (120) und eine um den Statorkern (120) gewickelte Statorspule (121) aufweist und in dem Gehäuse (100) angeordnet ist; und
einen Rotor (130) nach einem der vorhergehenden Ansprüche, wobei der Rotorkern (133) in dem Stator (119) angebracht ist und wobei die mehreren Permanentmagnete (137) auf dem Rotorkern (133) angebracht sind; und
wobei die mehreren Sprühdüsen (140) innerhalb des Gehäuses (100) angeordnet sind, so dass das Kühlfluid durch die mehreren Sprühdüsen (140) auf die Statorspule (121) und den Statorkern (120) gesprüht wird,
wobei der erste Fluidkanal (132) innerhalb der Drehwelle (131, 231) ausgebildet ist;
wobei die zweiten Fluidkanäle (136) innerhalb des Rotorkerns (133) ausgebildet sind, um mit den Permanentmagneten (137) in Kontakt zu sein; und
wobei die mehreren Sprühlöcher (140) schräg durch einen Außenumfangsabschnitt des Endrings (138, 139) ausgebildet sind, so dass das Kühlfluid auf einen Endabschnitt der Statorspule (121) gesprüht wird, und
wobei ein Weg, entlang dessen das Kühlfluid durch den ersten Fluidkanal (132), die zweiten Fluidkanäle (136) und die mehreren Sprühlöcher (140) fließt, eine Einzeldurchgangs-Struktur aufweist, in der das Kühlfluid in einer einzigen Richtung fließt.

14. Elektromotor nach Anspruch 13, wobei mehrere Drehrippen (145) in einer bogenförmigen Form von einer Außenfläche jedes der mehreren Endringe (138, 139) vorstehen, um Energie auszuüben, um es zu ermöglichen, dass das Kühlfluid, das aus den mehreren Sprühdüsen (111, 112) und den mehreren Sprühlöchern (140) austritt, zum ersten Fluidkanal (132) zirkuliert.

## Revendications

1. Rotor, comprenant :
un arbre rotatif (131, 231) comportant un premier canal de fluide (132) où circule un fluide de refroidissement ;
un noyau de rotor (133) comportant une pluralité d'aimants permanents (137) et des deuxièmes canaux de fluide (136) communiquant avec le premier canal de fluide (132) pour refroidir les aimants permanents (137), et monté de manière à être centré en rotation sur l'arbre rotatif (131, 231) ; et
une pluralité d'anneaux d'extrémité (138, 139) montés sur les deux parties d'extrémité respectives du noyau de rotor (133), et présentant une pluralité de trous d'injection (140) communiquant avec les deuxièmes canaux de fluide et par lesquels le fluide de refroidissement est injecté, et
où chacun des anneaux d'extrémité (138, 139) est pourvu d'une pluralité d'ailettes rotatives (145) disposées sur une surface extérieure de l'anneau d'extrémité (138, 139) de manière à être espacées l'une de l'autre dans la direction circonférentielle, afin de fournir une puissance pour faire circuler le fluide de refroidissement injecté par la pluralité de trous d'injection (140) dans le premier canal de fluide (132),
**caractérisé en ce que**
chaque ailette rotative (145) fait saillie dans la direction axiale sur la surface extérieure de l'anneau d'extrémité (138, 139), et est de forme incurvée de manière à être arquée dans la direction radiale depuis une partie d'extrémité intérieure jusqu'à une partie d'extrémité extérieure de l'anneau d'extrémité (138, 139), afin d'entraîner l'air en rotation autour de l'anneau d'extrémité (138, 139), et
où les extrémités extérieures des ailettes rotatives (145) sont adjacentes aux orifices d'injection (140), de sorte que l'air autour d'un côté extérieur des orifices d'injection (140) est mis en mouvement rapide et que la pression diminue sur le côté extérieur des orifices d'injection (140) afin de faciliter la circulation du fluide de refroidissement.

2. Rotor selon la revendication 1, où un premier anneau d'extrémité (138) monté sur une partie d'extrémité du noyau de rotor (133) dans la direction longitudinale du noyau de rotor (133) et un deuxième anneau d'extrémité (139) monté sur une autre partie d'extrémité du noyau de rotor (133) dans la direction longitudinale sont asymétriques l'un par rapport à l'autre.

3. Rotor selon la revendication 2, où une pluralité de premières ailettes rotatives (1451) formées sur le premier anneau d'extrémité (133) et une pluralité de deuxièmes ailettes rotatives (1452) formées sur le deuxième anneau d'extrémité (139) sont incurvées dans la même direction que le sens de rotation du noyau de rotor (133).

4. Rotor selon la revendication 2, où chaque anneau de la pluralité d'anneaux d'extrémité (138, 139) comprend :
une pluralité de canaux d'injection de fluide (141) formés dans une surface intérieure de l'anneau d'extrémité (138, 139) faisant face à une extrémité du noyau de rotor (133) de manière à communiquer avec la pluralité de trous d'injection (140), et espacés les uns des autres dans une direction circonférentielle ; et
une pluralité de canaux de retour de fluide (142) disposés en alternance avec la pluralité de canaux d'injection de fluide (141) dans la direction circonférentielle, de manière à transférer le fluide de refroidissement du noyau de rotor (133) vers un côté opposé dans la direction longitudinale du noyau de rotor (133).

5. Rotor selon la revendication 4, où des canaux de fluide axiaux (135) s'étendant depuis une partie d'extrémité radialement intérieure du noyau de rotor (133) sont reliés de manière à communiquer avec le premier canal de fluide (132), et
où chacun des canaux de retour (142) comprend en outre un canal de raccordement (143) relié de manière à communiquer avec le canal axial (135).

6. Rotor selon la revendication 1, où le fluide de refroidissement est de l'huile.

7. Rotor selon la revendication 1, où chaque trou de la pluralité de trous d'injection (140) est incliné vers le haut vers l'extérieur de l'anneau d'extrémité (138, 139).

8. Rotor selon la revendication 4, où la pluralité de canaux de fluide d'injection (141) formés dans le premier anneau d'extrémité (138) et la pluralité de canaux de fluide de retour (142) formés dans le deuxième anneau d'extrémité (139) sont disposés de manière à se faire face dans la direction longitudinale du noyau de rotor (133).

9. Rotor selon la revendication 1, où le fluide de refroidissement refroidit directement le noyau de rotor (133) et les aimants permanents (137) en se déplaçant du premier canal de fluide (132) vers les deuxièmes canaux de fluide (136), et refroidit une bobine de stator (121) par injection sur la bobine de stator (121) par la pluralité de trous d'injection (140).

10. Rotor selon la revendication 9, où le trajet du fluide de refroidissement transféré de l'arbre rotatif (131) au noyau de rotor (133) est formé en nombre identique à celui des pôles des aimants permanents (137), et une pluralité de trous de communication (1310) reliant l'arbre rotatif (131) et le noyau de rotor (133) sont formés dans une partie centrale de l'arbre rotatif (131) dans la direction radiale.

11. Rotor selon la revendication 9, où le trajet du fluide de refroidissement transféré de l'arbre rotatif (131, 231) au noyau de rotor (133) est formé en nombre identique à celui de la moitié des pôles des aimants permanents (137), et une pluralité de trous de communication (1310, 2311, 2312) reliant l'arbre rotatif (131, 231) et le noyau de rotor (133) sont formés dans une partie d'extrémité avant ainsi qu'une partie d'extrémité arrière de l'arbre rotatif (131, 231) dans la direction radiale.

12. Rotor selon la revendication 11, où la pluralité de trous de communication (1310) comprend une pluralité de premiers trous de communication (2311) formés dans la partie d'extrémité avant de l'arbre rotatif (231) et une pluralité de deuxièmes trous de communication (2312) formés dans la partie d'extrémité arrière de l'arbre rotatif (231), et
où le premier trou de communication (2311) et le deuxième trou de communication (2312) ont une différence de phase de 360 degrés/le nombre de pôles.

13. Moteur électrique, comprenant :
un carter (100) comportant un espace de réception ;
un stator (119) comprenant un noyau de stator (120) et une bobine de stator (121) enroulée autour du noyau de stator (120), et disposé dans le carter (100) ; et
un rotor (130) selon l'une des revendications précédentes, où le noyau de rotor (133) est monté dans le stator (119), et où la pluralité d'aimants permanents (137) est montée sur le noyau de rotor (133) ; et
où la pluralité de buses d'injection (140) est disposée à l'intérieur du carter (100), de sorte que le fluide de refroidissement est injecté sur la bobine de stator (121) et le noyau de stator (120) par la pluralité de buses d'injection (140),
où le premier canal de fluide (132) est formé à l'intérieur de l'arbre rotatif (131, 231) ; où les deuxièmes canaux de fluide (136) sont formés à l'intérieur du noyau de rotor (133) de manière à être en contact avec les aimants permanents (137) ; et
où la pluralité de trous d'injection (140) est formée obliquement dans une partie circonférentielle extérieure de l'anneau d'extrémité (138, 139) de sorte que le fluide de refroidissement est injecté sur une partie d'extrémité de la bobine de stator (121), et
où le trajet le long duquel le fluide de refroidissement s'écoule dans le premier canal de fluide (132), les deuxièmes canaux de fluide (136) et la pluralité de trous d'injection (140) présente une structure à passage unique où le fluide de refroidissement s'écoule dans une seule direction.

14. Moteur électrique selon la revendication 13, où une pluralité d'ailettes rotatives (145) font saillie en forme d'arc sur une surface extérieure de chacun des anneaux de la pluralité d'anneaux d'extrémité (138, 139), afin d'appliquer une puissance permettant au fluide de refroidissement injecté par la pluralité de buses d'injection (111, 112) et la pluralité de trous d'injection (140) de circuler vers le premier canal de fluide (132).
